# EUROPEAN PATENT SPECIFICATION

(11) **EP 2 522 230 B1**
(45) Date of publication and mention of the grant of the patent: **02.12.2015**
(21) Application number: 11166066.8
(22) Date of filing: 13.05.2011
(51) Int. Cl.: A23L 1/00

(54) **MICROWAVEABLE BATTER**
MIKROWELLENGEEIGNETER BACKTEIG
PÂTE À FRIRE POUVANT PASSER AUX MICRO-ONDES

(43) Date of publication of application: 14.11.2012
(73) Proprietor: Crisp Sensation Holding SA, 1208 Geneva (CH)
(72) Inventor: Pickford, Keith, Manchester M45 7QF (GB)
(74) Representative: Browne, Robin Forsythe

(56) References cited:
- EP-A1- 1 929 887
- EP-A2- 2 359 697
- US-A- 4 913 918
- US-A1- 2002 192 332
- US-A1- 2010 272 865
- US-A1- 2011 177 200
- US-A1- 2011 177 211

## Description

This invention relates to a coating for foodstuffs, which is cookable or reheatable using a microwave oven, combination microwave oven or by radiant heat by any means. The invention relates particularly but not exclusively to microwaveable cookable or reheatable batters or breaded coatings.

Microwave ovens are commonly used for heating food products, which have been pre-prepared by a foodstuff manufacturer. Pre-prepared products include batter coated foodstuffs in which the basic foodstuff, for example meat, fish, poultry, vegetables, fruit or dairy products, has been coated in a batter optionally coated with crumbs, deep fried and then frozen for supply to a consumer.

Heating in a microwaveable oven may complete the cooking process or simply reheat a previously cooked product. Microwave cookable coatings have particular requirements. Microwave energy penetrates throughout a food product. Steam released from the core of a food product can cause the batter coating to become soggy. This impairs the texture and taste of the product.

WO85/01188 disclosed batters containing high amylose flour for microwaveable prefried foodstuffs. WO 88/06007 disclosed a batter composition and method of preparation wherein the foodstuff is pre-dusted with high amylose starch and methylcellulose. The batter included high enzyme soya flour. WO93/003634 disclosed an improved pre-dust composition including a mixture of particulate starch and particulate cellulose gum, which gelled on heating in the presence of moisture. Such a pre-dust can form a dense, high viscosity barrier to absorption of oil and migration of moisture. The barrier also provides a stable environment for any seasoning and can enhance bonding with the batter. Although high enzyme soy flours generally afford acceptable products, variations in their enzyme content have given rise to inconsistent and occasionally undesirable flavours. WO96/032026 disclosed a microwaveable batter comprising starch, flour, a gelling agent, an enzyme additive and further ingredients. An exemplified formulation comprised genetically modified high amylose maize flour.

US 2010/272865 discloses a microwave cookable or reheatable chicken egg roll coated with a batter comprising 50 to 60% water, 20 to 30% whole grain flour, 10 to 15% wheat flour, I to 2% modified foodstarch, 1 to 2% egg powder and less than 1% salt and emulsifier.

It is the object of the present invention to provide a batter coating having improved properties during manufacture, storage, microwave cooking or reheating, and upon consumption.

The inventors have found that a foodstuff coating composition having such improved properties can be obtained by combining water and a number of food ingredients including flour, non-modified starch and gelling agent in specific amounts. Furthermore, as will be demonstrated below, the inventors have found that certain types of flours are particularly suitable.

Batter or breaded coatings in accordance with this invention are preferably cookable or reheatable using conventional ovens or fryers in addition to microwave ovens and combination microwave ovens.

According to the present invention a microwave cookable or reheatable foodstuff coating composition consisting of 55 to 80 wt% water and 20 to 45 wt% by dry weight of an ingredient mixture consisting of:
a. 35 to 60 wt% of a flour component selected from the group consisting of:
   one or more of soy flour, maize flour, rice flour and wheat flour.
b. 15 to 35 wt% ofnon-modified starch;
c. 0.1 to 5 wt% of a gelling agent;
d. 0 to 15 wt% of modified starch; and
e. 0 to 35 wt% of other edible ingredients.

The foodstuff coating composition of the present invention preferably consists of 55 to 80 wt% water and 20 to 45 wt% of the ingredient mixture as defined herein. Even more preferably, the coating composition consists of 58-75 wt% water and 25-42 wt% of the ingredient mixture.

In accordance with one embodiment, the flour component does not consist of a combination of 29 parts by weight soya flour and 19.2 parts by weight maize flour. More preferably, the flour component does not consist of a mixture of 50-70 wt% soya flour and 30-50 wt% maize flour. In an even more preferred composition the flour component does not comprise a mixture of two or more gluten free flours including maize flour.

In accordance with another, alternative embodiment, the flour component comprises a mixture of two or more gluten free flours including maize flour.

The gelling agent may be selected from the group consisting of collagen, alginate, xanthan gum, gelatine, guar gum, agar gum, gum arabic, locust bean gum, carrageenan and combinations thereof. Preferably, the gelling agent is selected from the group consisting of xanthan gum, guar gum, carrageenan and combinations thereof.

The amount of the starch component (non-modified and modified starch), excluding any starch which may be present in the flour, may comprise about 20-35%, more preferably about 22-32%, even more preferably 26-31% and most preferably about 28.8%, by weight of the ingredient mixture.

Advantageously, non-modified starch may comprise about 18-35%, more preferably about 20-32%, even more preferably 22-31% and most preferably about 28.89% by weight of the ingredient mixture.

The non-modified starch preferably comprises high amylose starch. In this specification high amylose starch is a starch having an amylose content of at least 50%. Preferably maize starch is used, for example as manufactured under trademark HYLON 7 of National Starch. An amylose content of about 60% to about 80%, preferably about 72-77%, is preferred. A hot swell starch may be used.

Examples of modified starch that may advantageously be employed in the coating composition include hydrolysed starches, e.g. acid hydrolysed starch.

The flour component may comprise about 40% to about 55%, preferably about 48.2%, by weight of the ingredient mixture. The percentage of the ingredient mixture in the present coating composition is important to provide a composition having optimal viscosity or a range of viscosities which may be achieved by adjustment of the dilution of the mixture prior to use dependent on the nature of the substrate to be coated, the water content of the substrate, the adhesive characteristics of the substrate surface and the desired properties of the resultant coating.

The weight ratio of flour to starch components (non-modified and modified starch), that is non-flour starch, may be in the range of 1:1 to 3:1, preferably of 4:3 to 2:1.. The weight ratio of flour to non-modified starch (i.e. non-flour starch) may be in the range of 1:1 to 4:1, preferably of 4:3 to 2:1.

Preferred flour components comprise one or more, preferably two flours selected from the group consisting of soy flour, maize flour, rice flour and wheat flour. The inventors have found that these flours can be used to prepare breaded microwave cookable or reheatable foodstuffs that combine outstanding frozen storage stability with excellent eating quality after preparation in a microwave oven. Furthermore, coating compositions made with these flours exhibited good emulsion stability and adhesiveness. Particularly good results can be obtained if the flour component comprises one or more flours, preferably two or more flours, selected from the group consisting of soy flour and wheat flour. Spelt flour is an example of a wheat flour that may be used.

Mixtures of more than two flours may not be preferred for simplicity of manufacture and product consistency.

The flour component preferably is composed of one or more gluten free flours. Gluten free flour referred to in this specification may contain less than 1% gluten, preferably less than 0.1% gluten. In particularly preferred flours, gluten is completely absent.

Use of gluten-free flour or low gluten flour is advantageous to avoid formation of a slimy layer or deterioration when frozen, particularly if partially thawed and re-frozen before use. Such as may occur during transportation from a store to a customer's home.

The flour mixture preferably has a fat content of about 15-33 wt%, more preferably about 20-28 wt%, especially about 24 wt%. Full fat soy flour may be employed.

Use of very high amylose flours containing 70 wt% amylose, such as are disclosed in WO85/01188 is not preferred. Flours having an amylose content of 30 wt% to 50 wt%, typically about 37 wt% are preferred.

A reducing sugar or mixture of reducing sugars may be used to give colour to the cooked coating. D-xylose is preferred although fructose, maltose or mixtures of these reducing sugars may be used. Preferably, the ingredient mixture contains D-xylose in an amount of about 1-3 wt%, more preferably about 2 wt%.

The gelling agent or thickener (referred to for convenience as a gelling agent) is employed in an amount sufficient to stabilise the coating as an emulsion. One or more of the following may be employed: collagen, alginate, xanthan gum, gelatine, guar gum, agar gum, gum arabic, locust bean gum, or carrageenan. Use of guar gum or mixtures containing guar gum is preferred. For instance, mixtures of guar and xanthan gums may be used. An amount of the gelling agent which is effective to provide a thickened composition may be used. An amount of about 0.1 wt% to about 5 wt%, preferably about 0.5 wt% to about 3 wt%, more preferably about 1 wt%, may be employed in the ingredient mixture. The gelling agent is preferably present in an amount sufficient to give long-term stability, for example to allow the batter to be stored before use.

The further ingredients may include whole egg. In the ingredient mixture preferably an amount of about 6-25 wt% egg solids, preferably about 10-18 wt% egg solids, more preferably about 14 wt% egg solids, may be employed. The egg may comprise dried egg. This may comprise dried whole egg or a blend of egg white and egg yolk.

Monoglyceride, such as glyceryl monostearate, may be used as an emulsifier. Alternative emulsifiers may be used. Advantageously, the ingredient mixture contains emulsifier in an amount of 0.5 wt% to 6 wt%, preferably of 1 wt% to 5 wt%, preferably about 2%.

A phosphate may be employed in the ingredient mixture in an amount of about 0.7 to 3 wt% to adjust the pH for optimum enzyme activity. Monosodium phosphate in an amount of about 1.87 wt% is preferred.

The further ingredients preferably include ammonium bicarbonate used as an aid to formulation. An amount of about 0.7 wt% in the ingredient mixture is preferred.

Glucono-D-lactone may be used as a slow release pH adjuster. An amount of about 0.67 wt% may be employed in the ingredient mixture.

Sodium acid pyrophosphate may be used to regulate pH. An amount of about 0.37 wt% may be employed in the ingredient mixture.

A thickener, for example methylcellulose, such as Methocel A4M, may suitably be used in the ingredient mixture in an amount of about 0.1-1 wt%, preferably about 0.25 wt%.

Use of a coating composition in accordance with this invention confers several advantages. The coating adheres well to a substrate and to subsequently applied crumb. The coating allows escape of moisture during frying but does not give a high degree of fat pickup from the frying oil. A shell-like coating is formed to give a desirably crisp bite.

The gel, batter and crumb form an integral consolidated layer after cooking, e.g. frying.

Preferred compositions of this invention include an enzyme component, especially an enzyme component comprising alpha-amylase.

The enzyme component is preferably a concentrated enzyme preparation. Enzyme containing conventional ingredients used in batter, for example high enzyme flours, are inconsistent and are not preferred. However, the concentrated enzyme preparation may be blended with a further ingredient such as starch or flour to facilitate mixing into the composition. The enzyme preparation may contain buffers or stabilizers.

Preferred enzyme components include bacterial amylases, for example, Novamyl BG10000.

The enzyme component preferably contains only the enzymes required for the coating composition. Lipoxygenases or other enzymes, which may be present in commercial high enzyme flours are preferably avoided since these may give rise to adverse flavours.

The viscosity of the coating composition before use is preferably in the range of about 400 to 700 cP, preferably about 550 cP, measured using a Brookfield viscometer with a No 3 spindle at 60 rpm.

The freshly prepared coating composition may have a viscosity of about 1500 to 1700 cP, preferably about 1600 cP. After mixing in a high shear mixer, the temperature may be raised to 42°C. Following mixing the batter is stored and allowed to ferment. After storage, the mixture is diluted with water to give a final ratio of e.g. 2.4 parts of water to 1 part of ingredient mixture to give a viscosity of about 550 cP.

The ingredients of the coating composition may be mixed in starter batches in the ratio of 2 parts of water to 1 of ingredient mixture, and stored overnight, for example in a chill room. The batter continues to ferment for about 24 hours at a decreasing rate until the temperature of the batch reaches approximately 5°C. The viscosity increases overnight to a value between about 1000 cP and about 1600 cP depending on the batch. The mixer used may be a Silverson batch mixer with a high shear slotted disintegrating head.

Another aspect of the invention relates to a method of coating a microwave cookable or reheatable foodstuff comprising the steps of applying a coating composition as defined herein before to an edible solid substrate, followed by the application of a crumb layer.

A pre-dust or pre-coating may be applied to the substrate before application of the coating composition. A conventional pre-dust may be used but use of an aqueous pre-coating composition is preferred.

According to a particularly preferred embodiment, the edible solid substrate has been pre-coated with an aqueous pre-coating composition, said aqueous pre-coating composition comprising 97 to 99.7 wt% water and 0.3 to 3.0 wt% by dry weight of an ingredient mixture including:
28 to 40% starch;
18 to 30% thickener;
20 to 35% xanthan gum;
10 to 25% egg albumen;
followed by application of fine crumb to the aqueous coating to form a layer of fine crumb encasing the substrate; and
applying the coating composition as defined herein before to the crumb layer.

Yet another aspect of the invention relates to a microwave cookable or reheatable food composition comprising a coating composition as defined herein or as manufactured by the method defined above.

Amounts and quantities referred to in this specification are by weight unless indicated otherwise. Percentages and other proportions are selected from ranges given to total 100%.

### EXAMPLES

Examples 2, 4 to 7 and 10 are not presently claimed.

### Example 1

A batter was prepared from a dry premix having the following composition:

| | Wt% |
|---|---|
| High amylose starch (Hylon 7) | 28.8 |
| Soy flour (Hisoy) | 48.2 |
| Dried whole egg (Henningsen W1) | 14.0 |
| Guar gum | 1.0 |
| Methylcellulose (Methocel A4M) | 0.2 |
| Glyceryl monostearate | 2.0 |
| D-xylose | 2.0 |
| Monosodium phosphate | 1.9 |
| Ammonium bicarbonate | 0.7 |
| Glucono-deltalactone | 0.7 |
| Sodium acid pyrophosphate | 0.4 |
| Alpha-amylase | 0.1 |

The batter was prepared by mixing 2 parts of water with 1 part of the dry premix using a Silverson DX high shear mixer with a slotted disintegrating head at about 4500 rpm. Homogenisation of the batter mixture was continued until a temperature of 42°C was reached by mechanical heat transfer. The homogenised batter mixture was kept under ambient conditions for at least 1 hour before being cooled to 4-7°C.

The viscosity of the refrigerated batter was determined with a Brookfield viscometer, using a number 63 spindle at 60 rpm. The batter was diluted with cold tap water under stirring until a viscosity of 650-750 cPs was reached. Once this viscosity was reached, the batter was ready for use.

### Example 2

A batter was prepared from a dry premix as described in the following table, using the procedure described in Example 1.

### Example 2

A batter was prepared from a dry premix as described in the following table, using the procedure described in Example 1.

| | Wt% |
|---|---|
| High amylose starch (Hylon 7) | 28.8 |
| Maize flour | 41.2 |
| Dried whole egg (Henningsen W1) | 21.0 |
| Guar gum | 1.0 |
| Methylcellulose (Methocel A4M) | 0.2 |
| Glyceryl monostearate | 2.0 |
| D-xylose | 2.0 |
| Monosodium phosphate | 1.9 |
| Ammonium bicarbonate | 0.7 |
| Glucono-deltalactone | 0.7 |
| Sodium acid pyrophosphate | 0.4 |
| Alpha-amylase | 0.1 |

### Example 3

Example 1 was repeated except that the soy flour was replaced by a blend of 29 parts by weight of soy flour and 19.2 parts by weight of defatted soy flour.

### Example 4

Example 1 was repeated except that the soy flour was replaced by a blend of 29 parts by weight of soy flour and 19.2 parts by weight of low gluten wheat flour.

### Example 5

Example 1 was repeated except that the soy flour was replaced by a blend of 29 parts by weight of soy flour and 19.2 parts by weight of spelt flour.

### Example 6

Example 1 was repeated except that the soy flour was replaced by a blend of 29 parts by weight of soy flour and 19.2 parts by weight of maize flour.

### Example 7

A batter was prepared from a dry premix as described in the following tables, using the procedure described in Example 1.

| | Wt% |
|---|---|
| High amylose starch (Hylon 7) | 28.8 |
| Soy flour (Hisoy) | 27.0 |
| Maize flour | 11.2 |
| Hydrolyzed starch (Perfectagel 707) | 10.0 |
| Dried whole egg (Henningsen W1) | 14.0 |
| Guar gum | 1.0 |
| Methylcellulose (Methocel A4M) | 0.2 |
| Glyceryl monostearate | 2.0 |
| D-xylose | 2.0 |
| Monosodium phosphate | 1.9 |
| Ammonium bicarbonate | 0.7 |
| Glucono-D-lactone | 0.7 |
| Sodium acid pyrophosphate | 0.4 |
| α-amylase | 0.1 |

### Example 8 - Preparation of frozen chicken nuggets.

A dry stabiliser composition was prepared using the following ingredients:

| | Wt% |
|---|---|
| Methylcellulose (Methocel A4M) | 15 |
| Starch (Thermflo) | 24 |
| Egg albumen | 15 |
| Xanthan gum | 6 |
| Polydextrose | 40 |

A chicken mixture for chicken nuggets was prepared with the following composition using the stabilizer described above:

| | Wt% |
|---|---|
| Chicken emulsion | 20 |
| Skin - 3mm | 18 |
| Chicken breast - 10mm | 50 |
| Water | 2 |
| Rusk | 2 |
| Stabiliser (Example 8) | 5 |
| Seasoning | 3 |

The chicken breast was chilled to -3°C and minced using a 10mm plate. After mincing, the temperature was 0-3°C. Water was added with mixing. A chicken emulsion comprising the following ingredients was added with mixing:

| | Wt% |
|---|---|
| Chicken skin | 44 |
| Water | 44 |
| Soy isolate | 11 |
| Salt | 1 |

The dry stabiliser composition was added and mixed thoroughly. Rusk was added with mixing followed by seasoning. A vacuum was applied to the mixture to consolidate the structure following which the chicken mixture was chilled to -3°C and formed into shaped pieces.

In the meantime, an aqueous pre-coating composition had been prepared from a dry mix having the following composition:

| | Wt% |
|---|---|
| Modified starch (Thermflo) | 35 |
| Thickener (Methocel A4M) | 25 |
| Xanthan gum | 25 |
| Egg albumen | 15 |

The mixture was dissolved in water to form a 1% solution using a CFS Scanbrine mixer with paddle agitation. The solution was left to stand for 24 hours before being applied to the impregnated substrate pieces using a tempura type batter applicator in which the substrate pieces was dipped. To prevent the formation of bubbles in the aqueous pre-coating composition anti foaming agents can be used.

A fine crumb having a mesh size of less than 1 mm was prepared as disclosed in WO 2010/001101. This fine crumb was applied to the pre-coated substrate pieces using a CFS Crumbmaster breadcrumb applicator.

The crumbed pieces so produced were coated with the batter described in Examples 1-6. To this end the crumbed pieces were passed through the batter in a tempura batter applicator.

Next, a coarse crumb (particle size 3-4 mm) was applied to the battered substrate pieces in a second CFS Crumbmaster applicator with slight pressure from a roller.

The coated substrate pieces so obtained were fried in pure, fresh rapeseed oil for 2 minutes 20 seconds approximately at 180-188°C. After frying, the core temperature was approximate 90°C.

The products were quickly transferred from the fryer into a cryogenic freezer by a conveyor belt. On entry into the freezer the core temperature of the substrate pieces was still above 75°C. The frozen products were packaged in airtight bags (six products per bag) that have been evacuated using light vacuum prior to sealing. The packaged product was stored for at least 10 weeks at a temperature of -20 to -22°C.

### Example 9 - Reheating and evaluation

The frozen products described in Example 8 were removed from the freezer after the storage period of at least 10 weeks. The frozen products were prepared for evaluation by an expert panel by heating them in a Whirlpool microwave type VT265/BL. First, the Crisp dish was preheated by pressing the "Crisp" button, selecting a heating period of 3 minutes and pressing the "Start" button. Next, 6 nuggets were placed on the preheated dish, the "Crisp" button was pressed, a heating period of 3 minutes was selected and the "Start" button was pressed. After the heating the core temperature of the nuggets was determined in order to ensure that it exceeded 72°C. The heated nuggets were kept for 1 minute under ambient conditions before being presented to the panel.

The reheated products were subjected to blind sensory evaluation by an expert panel. The panel members scored product features such as "crispiness", "mouthfeel", "adhesion" and "taste" on a scale of 1 to 5 (5 representing the best possible score). The average scores obtained for the products made with the batters described in Examples 1-6 ranged from 3.0 to 3.8 as shown in the following table.

| Example | Average panel score |
|---|---|
| 1 | 3.7 |
| 2 | 3.3 |
| 3 | 3.5 |
| 4 | 3.0 |
| 5 | 3.3 |
| 6 | 3.8 |
| 7 | 3.0 |

### Comparative Examples 1-5

Example 1 was repeated except that the soy flour was replaced by a blend of 29 parts by weight of soy flour and 19.2 parts by weight of one of the following flours:
- Pea flour
- Lupine flour
- Oat flour
- Barley flour

The batter compositions so obtained were used to produce frozen coated chicken pieces using the procedure described in Example 8. The frozen products were reheated and evaluated in the way described in Example 9. All products received a score that was well below 3.0.

### Comparative Example 6

Example 1 was repeated except that the soy flour content was reduced to 29.0 wt% and the content of high amylose starch was increased to 48.0 wt%.

The batter composition so obtained was used to produce frozen coated chicken pieces using the procedure described in Example 8. The frozen product so obtained was reheated and evaluated in the way described in Example 9. The product received a score that was well below 3.0.

### Comparative Example 7

Example 1 was repeated except that the soy flour was replaced by a blend of 29 parts by weight of soy flour and 19.2 parts by weight of native potato starch.

The batter composition so obtained was used to produce coated frozen coated chicken pieces using the procedure described in Example 83. The frozen product was reheated and evaluated in the way described in Example 9. The product received a score that was well below 3.0.

### Comparative Example 8

Example 1 was repeated except that the soy flour was replaced by a blend of 29 parts by weight of soy flour and 19.2 parts by weight of maize flour and that the guar gum was replaced by whole egg.

The batter composition so obtained was used to produce frozen coated chicken pieces using the procedure described in Example 8. The frozen product so obtained was reheated and evaluated in the way described in Example 9. The product received a score that was well below 3.0.

### Example 10

Batters are prepared from dry premixes as described in the following tables, using the procedure described in Example 1
(a)

| | wt% |
|---|---|
| Soy flour (Hisoy) | 30.0 |
| High amylose starch (Hylon 7) | 30.0 |
| Rice flour | 16.0 |
| Whole egg (Henningsen W1) | 15.0 |
| Glyceryl monostearate | 2.0 |
| D-xylose | 2.0 |
| Mono sodium phosphate | 1.9 |
| Guar gum | 1.0 |
| Ammonium bicarbonate | 0.7 |
| Glucono-D-lactone | 0.7 |
| Sodium acid pyrophosphate | 0.4 |
| Methylcellulose (Methocel A4M) | 0.2 |
| α-amylase | 0.1 |
| | 100.0 |

(b)

| | Wt% |
|---|---|
| Soy flour (Hisoy) | 15.0 |
| High amylose starch (Hylon 7) | 30.0 |
| Maize flour | 15.0 |
| Rice flour | 16.0 |
| Whole egg (Henningsen W1) | 15.0 |
| Glyceryl monostearate | 2.0 |
| D-xylose | 2.0 |
| Mono sodium phosphate | 1.9 |
| Guar gum | 1.0 |
| Ammonium bicarbonate | 0.7 |
| Glucono-D-lactone | 0.7 |
| Sodium acid pyrophosphate | 0.4 |
| Methylcellulose (Methocel A4M) | 0.2 |
| α-amylase | 0.1 |
| | 100.0 |

(c)

| | Wt% |
|---|---|
| Soy flour (Hisoy) | 10.0 |
| High amylose starch (Hylon 7) | 30.0 |
| Maize flour | 16.0 |
| Rice flour | 20.0 |
| Whole egg (Henningsen W1) | 15.0 |
| Glyceryl monostearate | 2.0 |
| D-xylose | 2.0 |
| Mono sodium phosphate | 1.9 |
| Guar gum | 1.0 |
| Ammonium bicarbonate | 0.7 |
| Glucono-D-lactone | 0.7 |
| Sodium acid pyrophosphate | 0.4 |
| Methylcellulose (Methocel A4M) | 0.2 |
| α-amylase | 0.1 |
| | 100.0 |

(d)

| | Wt% |
|---|---|
| Soy flour (Hisoy) | 15.0 |
| High amylose starch (Hylon 7) | 25.0 |
| Maize flour | 16.0 |
| Rice flour | 20.0 |
| Whole egg (henningsen w1) | 15.0 |
| Glyceryl monostearate | 2.0 |
| D-xylose | 2.0 |
| Mono sodium phosphate | 1.9 |
| Guar gum | 1.0 |
| Ammonium bicarbonate | 0.7 |
| Glucono-D-lactone | 0.7 |
| Sodium acid pyrophosphate | 0.4 |
| Methylcellulose (Methocel A4M) | 0.2 |
| α-amylase | 0.1 |
| | 100.0 |

The batter compositions (a) to (d) are used to produce frozen coated chicken pieces using the procedure described in Example 8. The frozen products so obtained are reheated and evaluated in the way described in Example 9. All products receive a satisfactory score.

## Claims

1. A microwave cookable or reheatable foodstuff coating composition consisting of 55 to 80 wt% water and 20 to 45 wt% by dry weight of an ingredient mixture consisting of:
a. 35 to 60 wt% of a flour component selected from the group consisting of:
one or more of soy flour, maize flour, rice flour and wheat flour;
b. 15 to 35 wt% of non-modified starch;
c. 0.1 to 5 wt% of a gelling agent;
d. 0 to 15 wt% of modified starch; and
e. 0 to 35 wt% of other edible ingredients;

2. A coating composition as claimed in claim 1, wherein the flour component comprises rice flour.

3. A coating composition as claimed in claim 1, wherein the flour component is selected from soy flour, maize flour, wheat flour and combinations thereof.

4. A coating composition as claimed in claim 1, wherein the flour component is a mixture of soy flour and a cereal flour selected from maize flour, wheat flour, rice flour and combinations thereof.

5. A. coating composition as claimed in any preceding claim, wherein the ingredient mixture contains 0.1 to 5 wt% of a gelling agent selected from the group consisting of: collagen, alginate, xanthan gum, gelatine, guar gum, agar gum, gum arabic, locust bean gum, carrageenan and combinations thereof.

6. A coating composition as claimed in any preceding claim, wherein the ingredient mixture comprises 5-25 wt% of egg solids, preferably egg solids from egg material selected from whole gg, egg yolk, egg white and combinations thereof.

7. A coating composition as claimed in any preceding claim wherein the ingredient mixture comprises 20 to 32 wt% non-modified starch.

8. A coating composition as claimed in any preceding claim wherein the non-modified starch is non-modified high amylose starch.

9. A coating composition as claimed in any preceding claim wherein the flour component has a fat content from about 15 wt% to about 33 wt%.

10. A coating composition as claimed in any preceding claim wherein the weight ratio of flour to non-modified starch is in the range from about 4:3 to about 2:1.

11. A coating composition as claimed in any preceding claim, wherein the ingredient mixture comprises 0.5 to 3 wt% of the gelling agent.

12. A coating composition as claimed in any preceding claim wherein the gelling agent is guar gum.

13. A coating composition as claimed in any preceding claim having a viscosity of about 380 to about 400 cP at 16°C using a Brookfield viscometer with a number 3 spindle to 60 rpm.

14. A method of coating a microwave cookable or reheatable foodstuff comprising the steps of applying a coating composition as claimed in any of the preceding claims to an edible solid substrate, followed by the application of a crumb layer.

15. A method of coating a microwave cookable or reheatable foodstuff wherein the edible solid substrate has been pre-coated with an aqueous pre-coating composition, said aqueous pre-coating composition comprising 97 to 99.7 wt% water and 0.3 to 3.0 wt% by dry weight of an ingredient mixture including:
28 to 40% starch;
18 to 30% thickener;
20 to 35% xanthan gum;
10 to 25% egg albumen;
followed by application of fine crumb to the aqueous coating to form a layer of fine crumb encasing the substrate; and
applying the coating composition as claimed in any of claims 1-13 to the crumb layer.

16. A microwave cookable or reheatable food composition comprising a coating composition as claimed in any of claims 1 to 13.

17. A microwave cookable or reheatable foodstuff manufactured by the method as claimed in claim 14 or 15.

## Patentansprüche

1. Mikrowellenkochbare oder wiedererwärmbare Nahrungsmittelbeschichtungszusammensetzung bestehend aus 55 bis 80 Gew.-% Wasser und 20 bis 45 Gew.-% im Trockengewicht einer Inhaltsstoffmischung bestehend aus:
a. 35 bis 60 Gew.-% einer Mehlkomponente ausgewählt aus der Gruppe bestehend aus:
einem oder mehr aus Sojamehl, Maismehl, Reismehl und Weizenmehl;
b. 15 bis 35 Gew.-% einer nicht modifizierten Stärke;
c. 0,1 bis 5 Gew.-% eines Geliermittels;
d. 0 bis 15 Gew.-% einer modifizierten Stärke; und
e. 0 bis 35 Gew.-% anderer geeigneter Bestandteile;

2. Beschichtungszusammensetzung gemäß Anspruch 1, wobei die Mehlkomponente Reismehl umfasst.

3. Beschichtungszusammensetzung gemäß Anspruch 1, wobei die Mehlkomponente gewählt ist aus Sojamehl, Maismehl, Weizenmehl und Kombinationen aus diesen.

4. Beschichtungszusammensetzung gemäß Anspruch 1, wobei die Mehlkomponente eine Mischung aus Sojamehl und einem aus Maismehl, Weizenmehl, Reismehl und Kombinationen aus diesem gewählten Getreidemehle ist.

5. Beschichtungszusammensetzung nach einem der vorhergehenden Ansprüche, wobei die Inhaltsstoffmischung 0,1 bis 5 Gew.-% eines Geliermittels enthält, das ausgewählt ist aus der Gruppe bestehend aus: Collagenalginat, Xanthangummi, Gelatine, Guargummi, Agargummi, Gummi Arabicum, Johannisbrotkernmehl, Carrageen und Kombinationen aus diesen.

6. Beschichtungszusammensetzung nach einem der vorhergehenden Ansprüche, wobei die Inhaltsstoffmischung 5 bis 25 Gew.-% von Eierfeststoffen umfasst, vorzugsweise Eierfeststoffe aus Eiermaterial, das gewählt ist aus ganzem Ei, Eidotter, Eiweiß und Kombinationen aus diesem.

7. Beschichtungszusammensetzung nach einem der vorhergehenden Ansprüche, wobei die Inhaltsstoffmischung 20 bis 32 Gew.-% einer nicht modifizierten Stärke umfasst.

8. Beschichtungszusammensetzung nach einem der vorhergehenden Ansprüche, wobei die nicht modifizierte Stärke eine nicht modifizierte hohe Amilosestärke ist.

9. Beschichtungszusammensetzung nach einem der vorhergehenden Ansprüche, wobei die Mehlkomponente einen Fettinhalt von ungefähr 15 Gew.-% bis ungefähr 33 Gew.-% aufweist.

10. Beschichtungszusammensetzung nach einem der vorhergehenden Ansprüche, wobei das Gewichtsverhältnis zwischen Mehl und nicht modifizierter Stärke in dem Bereich von ungefähr 4:3 bis ungefähr 2:1 liegt.

11. Beschichtungszusammensetzung nach einem der vorhergehenden Ansprüche, wobei die Inhaltsstoffmischung 0,5 bis 3 Gew.-% des Geliermittels umfasst.

12. Beschichtungszusammensetzung nach einem der vorhergehenden Ansprüche, wobei das Geliermittel ein Guargummi ist.

13. Beschichtungszusammensetzung nach einem der vorhergehenden Ansprüche mit einer Viskosität von ungefähr 380 bis ungefähr 400 cP bei 16°C unter Verwendung eines Brookfield-Viskosimeters mit einer Nummer-3-Spindel auf 60 Umin.

14. Verfahren zum Beschichten eines mikrowellenkochbaren oder wiedererwärmbaren Nahrungsmittels mit den Schritten des Aufbringens einer Beschichtungszusammensetzung nach einem der vorhergehenden Ansprüche auf ein essbares Substrat, gefolgt von dem Aufbringen einer Paniermehlschicht.

15. Verfahren zum Beschichten eines mikrowellenkochbaren oder wiedererwärmbaren Nahrungsmittels, wobei das essbare feste Substrat mit einer wässrigen Vorbeschichtungszusammensetzung vorbeschichtet wurde, wobei die wässrige Vorbeschichtungszusammensetzung 97 bis 99,7 Gew.-% Wasser und 0,3 bis 3,0 Gew.-% im Trockengewicht aus einer Inhaltsstoffmischung mit:
28 bis 40% Stärke;
18 bis 30% Verdickungsmittel;
20 bis 35% Xanthangummi;
10 bis 25% Eiereiweiß umfasst;
gefolgt von einem Aufbringen einer feinen Panade auf die wässrige Beschichtung zur Bildung einer Schicht aus feiner Panade, die das Substrat ummantelt; und
Aufbringen der Beschichtungszusammensetzung nach einem der Ansprüche 1 bis 13 auf die Paniermehlschicht.

16. Mikrowellenkochbare oder wiedererwärmbare Nahrungsmittelzusammensetzung mit einer Beschichtungszusammensetzung nach einem der Ansprüche 1 bis 13.

17. Mikrowellenkochbares oder wiedererwärmbares Nahrungsmittel hergestellt nach dem Verfahren nach Anspruch 14 oder 15.

## Revendications

1. Composition de produit alimentaire d'enrobage pouvant se cuisiner ou être réchauffée aux micro-ondes consistant en 55 à 80% en poids d'eau et 20 à 45% en poids sec d'un mélange d'ingrédients consistant en :
a. 35 à 60% en poids d'un composant fariné choisi dans le groupe consistant en : une ou plusieurs farines parmi la farine de soja, la farine de maïs, la farine de riz et la farine de blé ;
b. 15 à 35% en poids d'un amidon non-modifié ;
c. 0,1 à 5% en poids d'un agent gélifiant ;
d. 0 à 15% en poids d'un amidon modifié ; et
e. 0 à 35% en poids d'autres ingrédients alimentaires.

2. Composition d'enrobage selon la revendication 1, dans laquelle le composant fariné comprend de la farine de riz.

3. Composition d'enrobage selon la revendication 1, dans laquelle le composant fariné est choisi parmi la farine de soja, la farine de maïs, la farine de blé et des combinaisons de celles-ci.

4. Composition d'enrobage selon la revendication 1, dans laquelle le composant fariné est un mélange de farine de soja et d'une farine de céréale choisie parmi la farine de maïs, la farine de blé, la farine de riz et des combinaisons de celles-ci.

5. Composition d'enrobage selon l'une quelconque des revendications précédentes, dans laquelle le mélange d'ingrédients contient 0,1 à 5% en poids d'un agent gélifiant choisi dans le groupe consistant en : le collagène, l'alginate, la gomme xanthane, la gélatine, la gomme de guar, la gomme agar, la gomme arabique, la gomme de caroube, la gomme carraghénane et des combinaisons de ceux-ci.

6. Composition d'enrobage selon l'une quelconque des revendications précédentes, dans laquelle le mélange d'ingrédients comprend 5 à 25% en poids d'oeufs solides, de préférence des oeufs solides provenant de matière d'oeufs choisie parmi l'oeuf entier, le jaune d'oeuf, le blanc d'oeuf et des combinaisons de ceux-ci.

7. Composition d'enrobage selon l'une quelconque des revendications précédentes, dans laquelle le mélange d'ingrédients comprend 20 à 32% en poids d'amidon non-modifié.

8. Composition d'enrobage selon l'une quelconque des revendications précédentes, dans laquelle l'amidon non-modifié est un amidon non-modifié à forte teneur en amylose.

9. Composition d'enrobage selon l'une quelconque des revendications précédentes, dans laquelle le composant fariné présente une teneur en matière grasse d'environ 15% en poids à environ 33% en poids.

10. Composition d'enrobage selon l'une quelconque des revendications précédentes, dans laquelle le rapport en poids de farine à l'amidon non-modifié est situé dans la fourchette d'environ 4:3 à environ 2:1.

11. Composition d'enrobage selon l'une quelconque des revendications précédentes, dans laquelle le mélange d'ingrédients comprend 0,5 à 3% en poids d'agent gélifiant.

12. Composition d'enrobage selon l'une quelconque des revendications précédentes, dans laquelle l'agent gélifiant est la gomme de guar.

13. Composition d'enrobage selon l'une quelconque des revendications précédentes, laquelle présente une viscosité d'environ 380 à environ 400 cP à 16°C mesurée avec un viscosimètre Brookfield à broche numéro 3 et à 60 tpm.

14. Méthode d'enrobage d'un produit alimentaire pouvant se cuisiner ou être réchauffé aux micro-ondes comprenant les étapes d'application d'une composition d'enrobage selon l'une quelconque des revendications précédentes à un substrat solide comestible, suivi de l'application d'une couche de chapelure.

15. Méthode d'enrobage d'un produit alimentaire pouvant se cuisiner ou être réchauffé aux micro-ondes dans laquelle le substrat solide comestible a été pré-enrobé avec une composition aqueuse de pré-enrobage, ladite composition aqueuse de pré-enrobage comprenant 97 à 99,7% en poids d'eau et 0,3 to 3,0% en poids sec d'un mélange d'ingrédients incluant :
28 à 40% d'amidon ;
18 à 30% d'épaississant ;
20 à 35% de gomme xanthane ;
10 à 25% d'albumine d'oeuf;
suivie de l'application d'une chapelure fine à la composition aqueuse d'enrobage pour former une couche de chapelure fine enrobant le substrat ; et
l'application de la composition d'enrobage selon l'une quelconque des revendications 1 à 13 à la couche de chapelure.

16. Composition alimentaire pouvant se cuisiner ou être réchauffé aux micro-ondes comprenant une composition d'enrobage selon l'une quelconque des revendications 1 à 13.

17. Produit alimentaire pouvant se cuisiner ou être réchauffé préparé par la méthode selon l'une quelconque des revendications 14 ou 15.
